# EUROPÄISCHE PATENTANMELDUNG

(11) **EP 1 338 368 A1**
(43) Veröffentlichungstag der Anmeldung: **27.08.2003**
(21) Anmeldenummer: 02021610.7
(22) Anmeldetag: 27.09.2002
(51) Int. Cl.: B23K 1/00, H01R 4/02, H01R 4/22, H01R 4/72

(54) **Verfahren zum Verlöten metallischer Komponenten mit Hilfe eines rohrförmigen Verbindungsstücks**

(30) Priorität: 22.02.2002 DE 10207607
(71) Anmelder: Astrium GmbH, 81663 München (DE)
(72) Erfinder: Blabsreiter, Engelbert, 83026 Rosenheim (DE); Huber, Walter, 82041 Oberhaching (DE); Joas, Ludwig, 83126 Flintsbach (DE)
(74) Vertreter: Ulrich, Thomas

(57) **Zusammenfassung**

Beschrieben wird ein Verfahren zum Verlöten von mindestens zwei metallischen Komponenten (1,3), wobei jeweils ein Ende jeder der metallischen Komponenten (1,3) mit Hilfe eines rohrförmigen Verbindungsstückes (4) verlötet wird. Weiter wird eine Verwendung eines solchen Lötverfahrens zum Verlöten eines Drahtes (3) mit einem metallischen Kontakt (1), speziell für eine Anwendung bei kryogenen Einrichtungen, beschrieben.

## Beschreibung

Die vorliegende Erfindung betrifft die Problematik des Verlötens von metallischen Komponenten. Üblicherweise werden beim Verlöten die metallischen Komponenten mit einem Lot überzogen und direkt miteinander verlötet. Diese Art der Verbindung kann jedoch bei gewissen Anwendungen und Belastungen problematisch sein, beispielsweise wenn metallische Komponenten verbunden werden sollen, die im Betriebszustand stark unterschiedlichen Temperaturen ausgesetzt sind. In einem solchen Fall ist die Verwendung zumindest einer metallischen Komponente mit geringer thermischer Leitfähigkeit erforderlich. Diese Voraussetzung wird durch dünne Drähte, beispielsweise aus rostfreiem Stahl, erfüllt, jedoch ist eine Verbindung eines solchen dünnen Drahtes mit anderen metallischen Komponenten wie beispielsweise Steckern mit der vorgenannten Methode aufgrund des bei Zugbelastung auftretenden Freischneide-Effekts aus dem weicheren Lot problematisch. Ähnliche Probleme können auch bei anderen Anwendungen von Lotverbindungen auftreten, bei denen auch Zugbelastungen kompensiert werden müssen oder bei denen z.B. ein Verlöten der metallischen Komponenten nicht einfach realisiert werden kann.

Aufgabe der vorliegenden Erfindung ist es daher, eine Möglichkeit bereit zu stellen, die ein sicheres Verlöten metallischer Komponenten und eine höhere Beständigkeit der Lötverbindung gegen Zugbelastungen garantiert.

Diese Aufgabe wird gelöst durch die Merkmale des Patentanspruchs 1, eine spezielle Verwendung der Erfindung wird definiert durch die Merkmale des Patentanspruchs 4.

Beschrieben wird ein Verfahren zum Verlöten von mindestens zwei metallischen Komponenten. Dieses Verfahren ist durch folgende Schritte gekennzeichnet:

Einführen jeweils eines ersten Endes der metallischen Komponenten in ein rohrförmiges Verbindungsstück, welches zumindest in einem Teilbereich seiner Oberfläche eine Beschichtung mit einem Lot aufweist und dessen Innenkontur weitgehend der Außenkontur zumindest eines der ersten Enden der metallischen Komponenten entspricht, Verlöten der ersten Enden der metallischen Komponenten mit dem rohrförmigen Verbindungsstück.

Das rohrförmige Verbindungsstück kann also entweder eine teilweise oder vollständige Oberflächenbeschichtung aus einem Lotmaterial wie beispielsweise Zinn aufweisen, oder es kann sogar das Röhrchen komplett aus einem Lotmaterial bestehen, beispielsweise aus einem Edelmetall, insbesondere aus Silber oder Gold, oder einer Edelmetall-Legierung. Als Lotmaterialien sind auch - je nach Anwendungsbereich der Lotverbindung - weitere übliche Lotmaterialien denkbar. Es erfolgt also gemäß dem Verfahren nicht nur ein Verlöten der zwei metallischen Komponenten miteinander, sondern es erfolgt ein Verlöten jeder der metallischen Komponenten mit dem sie an einem Ende umschließenden rohrförmigen Verbindungsstück, welches die hauptsächliche Verbindung zwischen den metallischen Komponenten darstellt. Damit kann auch als Nebeneffekt zusätzlich ein Verlöten der metallischen Komponenten miteinander erfolgen. Damit wird statt einer eher punktförmigen Lotverbindung wie nach dem Stand der Technik nunmehr die Möglichkeit zur Schaffung einer ausgedehnteren Lotverbindung bereitgestellt, die leichter zu realisieren ist und bei Zugbelastungen ein besseres Auffangen der Zugkräfte gewährleistet, insbesondere durch die umschließende Anordnung des Verbindungsstückes.

Die Innenkontur des rohrförmigen Verbindungsstückes ist an die Außenkontur zumindest eines der ersten Enden angepasst, so dass nach einem Einführen der Enden in das rohrförmige Verbindungsstück die Innenkontur des rohrförmigen Verbindungsstückes idealerweise annähernd an der Außenkontur zumindest eines der ersten Enden anliegt oder zumindest nur ein geringer Abstand zwischen der Innenkontur des rohrförmigen Verbindungsstückes und der Außenkontur zumindest eines der ersten Enden besteht.

Um ein besseres Verlöten der ersten Enden mit dem rohrförmigen Verbindungsstück zu erzielen, können vor dem Einführen der ersten Enden in das rohrförmige Verbindungsstück die ersten Enden mit einem Lot beschichtet werden.

Es kann auch vorgesehen werden, dass die ersten Enden vor dem Verlöten bereits in ihrer Lötposition relativ zueinander fixiert werden, damit beim Verlöten kein gegenseitiger Versatz oder Auseinandergleiten der ersten Enden mehr erfolgen kann. Dazu können vor dem Einführen der ersten Enden in das rohrförmigen Verbindungsstück die ersten Enden mechanisch miteinander verbunden werden, beispielsweise durch eine formschlüssige Verbindung der ersten Enden oder durch zusätzliche Befestigungsmittel oder Klemmmittel wie z.B. Klammer, Schrumpfschlauch, Kleber oder ähnliches. Die ersten Enden werden dann in eine erste Endöffnung des rohrförmige Verbindungsstücks eingeführt und das rohrförmige Verbindungsstück wird auf den metallischen Komponenten von den ersten Enden der metallischen Komponenten weg verschoben, bis beide erste Enden der metallischen Komponenten aus einer zweiten Endöffnung des rohrförmigen Verbindungsstücks austreten.

Die vorliegende Erfindung, wie sie bisher beschrieben wurde, kann insbesondere vorteilhaft zum Verlöten eines Drahtes mit einem metallischen Kontakt verwendet werden. Gerade beim Verlöten von Drähten ist eine sichere und dauerhafte Lötverbindung wichtig, besonders, wenn der Draht Zugbelastungen ausgesetzt ist, beispielsweise durch thermische Längenänderungen aufgrund unterschiedlicher Betriebstemperaturen auf beiden Seiten der Lötverbindung. Das Verfahren gemäß der Erfindung kann insbesondere zum Verlöten eines Drahtes mit einem Durchmesser kleiner oder gleich 0,5 mm, speziell zum Verlöten eines Drahtes mit einem Durchmesser kleiner oder gleich 0,1 mm mit einem metallischen Kontakt verwendet werden. Das Verfahren ist beispielsweise anwendbar, wenn Drähte geringer thermischer Leitfähigkeit, also beispielsweise Stahldrähte, mit einem metallischen Kontakt verlötet werden müssen, speziell, wenn es sich dabei um dünne Stahldrähte handelt.

Insbesondere kann das Verfahren zum Verlöten eines Drahtes verwendet werden, der einen Bestandteil einer kryogenen Einrichtung bildet. Ein weiterer Gegenstand der vorliegenden Erfindung ist eine kryogene Einrichtung, aufweisend mindestens eine Lötverbindung, die durch ein vorstehend beschriebenes Verfahren hergestellt wurde. Eine solche kryogene Einrichtung, die beispielsweise im Bereich der Tieftemperaturphysik, der Raumfahrttechnik, der Medizintechnik oder ähnlichem realisiert sein kann, weist zumindest eine Komponente auf, die eine deutlich tiefere Temperatur besitzt als andere Komponenten der Einrichtung. Beispiele dafür sind Einrichtungen, die flüssige Gase bei tiefer Temperatur als richtung. Beispiele dafür sind Einrichtungen, die flüssige Gase bei tiefer Temperatur als Betriebs- oder Kühlmedien verwenden. Das Einsatzgebiet der Lötverbindung kann sich dabei auf Temperaturen der kälteren Komponenten unter 100 K, möglicherweise sogar auf Temperaturen unter 50 K erstrecken. Gerade hier ist die Stabilität er vorgenannten Lötverbindungen, speziell zum Löten von metallischen Leitern mit einer geringen thermischen Leitfähigkeit besonders wichtig.

Ein spezielles Ausführungsbeispiel wird nachfolgend anhand der Fig. 1 bis 6 erläutert.

Es zeigen:
- Fig. 1:: Schematische Darstellung einer erfindungsgemäßen Lötverbindung zwischen einem dünnen Draht und einem Steckerkontakt
- Fig. 2:: Schematische Darstellung eines rohrförmigen Verbindungsstückes
- Fig. 3 a) u. b):: Querschnitte durch zwei alternative Ausführungsformen des Verbindungsstückes nach Fig. 2
- Fig. 4:: Schematische Darstellung des Fixierens und Verlötens von Draht und Steckerkontakt
- Fig. 5:: Ausschnittsvergrößerung und Querschnittdarstellung einer Lötverbindung mit einem Verbindungsstück nach Fig. 3a)
- Fig. 6:: Ausschnittsvergrößerung und Querschnittdarstellung einer Lötverbindung mit einem Verbindungsstück nach Fig. 3b)

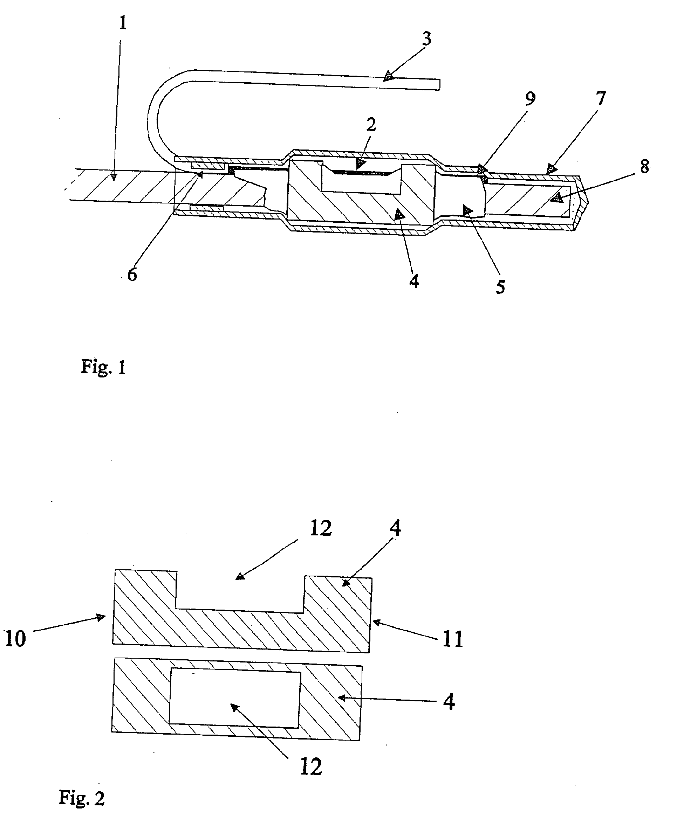

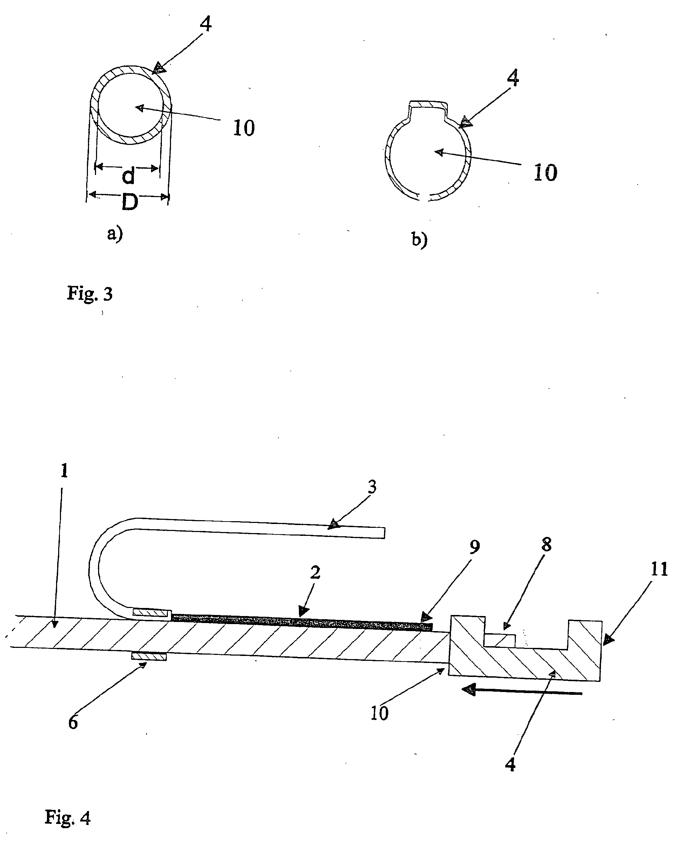

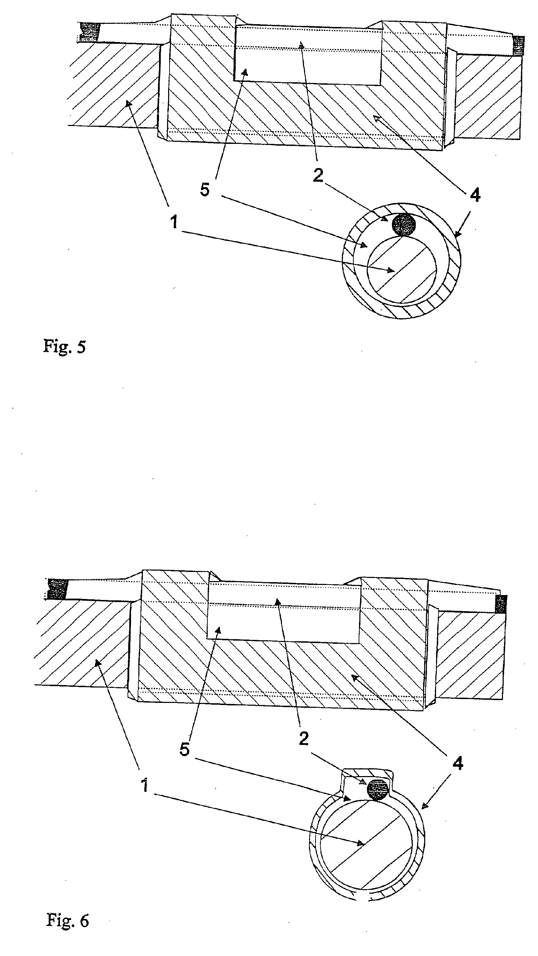

Fig. 1 zeigt eine erfindungsgemäß hergestellte Lötverbindung zwischen einem dünnen Draht 2, beispielsweise aus rostfreiem Stahl und mit einem Durchmesser kleiner oder gleich 0,1 mm, der somit eine geringe thermische Leitfähigkeit aufweist, und einem Steckerkontakt in Form eines Steckerstiftes 1. Steckerstift 1 und Draht 2 bilden somit zwei zu verlötende metallische Komponenten. Der Draht 2 kann in einem nicht zu verlötenden Teilbereich noch von einer Isolierung 3 umgeben sein. Für eine deutlichere Darstellung von Details wird auch auf die Figuren 4, 5 und 6 verwiesen. Der Steckerstift 1 weist ein erstes Ende 8 auf, der Draht 2 weist ein erstes Ende 9 auf. Die Außenkonturen des Drahtes 1 und des Steckerkontaktes 2 können grundsätzlich beliebig gewählt werden, zum Zwecke der Einfachheit weisen sowohl Draht 2 wie auch Steckerstift 1 im vorliegenden Beispiel im Querschnitt (siehe Fig. 5 und 6) eine runde Außenkontur auf.

Steckerstift 1 und Draht 2 sind mit Hilfe eines rohrförmigen Verbindungsstückes 4 verlötet, das entweder mit einem Lot beschichtet wurde oder selbst aus einem geeigneten Lotmaterial besteht. Durch das Verlöten bildet das aufgeschmolzene und anschließend wieder erstarrte Lot 5 eine Lötverbindung zwischen dem Steckerstift 1, dem Draht 2 und dem Verbindungselement 4. Zur Fixierung von Steckerstift 1 und Draht 2 vor dem Verlöten wurden beide Komponenten in einem an den Bereich der Lötverbindung angrenzenden Teilabschnitt mit einem Schrumpfschlauch 6 miteinander verbunden. Zur elektrischen Isolierung der Lötverbindung wurde die Anordnung nach dem erfolgten Verlöten noch mit einem weiteren Schrumpfschlauch 7 umgeben.

Fig. 2 zeigt ein rohrförmiges Verbindungsstück 4, das eine erste Endöffnung 10 und eine zweite Endöffnung 11 aufweist, einmal in einer Seitenansicht und einmal in einer Draufsicht. Das Verbindungsstück 4 weist entweder auf seiner Oberfläche eine Beschichtung mit einem Lot, beispielsweise Zinn, auf oder es besteht selbst aus einem Lotmaterial, beispielsweise Silber. Die Innenkontur des Verbindungsstückes 4, insbesondere der Innendurchmesser d der Endöffnungen 10, 11 (siehe Fig. 3) ist so gewählt, dass sie weitgehend der Außenkontur zumindest des ersten Endes 8 des Steckerkontaktes 2 entspricht, da dieser im vorliegenden Beispiel im Vergleich zum Draht 1 einen deutlich größeren Durchmesser aufweist und so die Außenkontur der Gesamtheit aus Steckerkontakt 1 und Draht 2 überwiegend durch die Außenkontur des Steckerkontakts 1 bestimmt wird (siehe Fig. 5 und 6). Im Fall der Fig. 3 a) ist daher die Innenkontur des Verbindungsstückes 4 ebenso rund gewählt wie die Außenkontur des Steckerkontaktes 1, der Innendurchmesser d des Verbindungsstückes 4 ist so groß gewählt, dass die Gesamtheit aus Steckerkontakt 1 und Draht 2 von dem Verbindungsstück 4 umschlossen werden kann (siehe Fig. 5). Im Falle der Fig. 3b) ist die Innenkontur des Verbindungselements 4 an die Außenkontur der Gesamtheit aus Steckerstift 1 und Draht 2 angepasst (siehe Fig. 5).

Das Verbindungsstück 4 kann aus einem Röhrchen (siehe Fig. 3a) oder auch aus einer Folie (siehe Fig. 3b) hergestellt werden. Es kann entweder das Verbindungselement 4 aus einem Lotmaterial bestehen wie z.B. aus Silber oder es kann auf das Verbindungselement 4 galvanisch ein Lot, beispielsweise durch galvanische Vorverzinnung, aufgebracht werden. Das Verbindungselement 4 kann im zweiten Fall aus jedem geeigneten Material bestehen, das lediglich die Möglichkeit zu einer galvanischen Verzinnung bieten muss. Ein Beispiel für ein solches Material wäre Nickel. Wird das Verbindungselement 4 aus einer Folie hergestellt, so kann die Folie durch eine Biegevorrichtung in die gewünschte Kontur des Verbindungselements 4 gebracht werden. Wird das Verbindungselement 4 aus einem Röhrchen hergestellt, so kann das Röhrchen kann durch Kaltziehen auf den notwendigen Innendurchmesser gebracht werden, auf die gewünschte Länge abgelängt werden und anschließend gegebenenfalls galvanisch verzinnt werden.

Um vor dem Verlöten und gegebenenfalls vor einer notwendigen Beschichtung des Verbindungselements 4 eine Reinigung des Verbindungselements 4 auch auf dessen Innenkontur zu erlauben und um nach dem Verlöten eine möglichst weitgehende Kontrolle über die Qualität der Lötverbindung zu erhalten, wurde das Verbindungselement 4 mit einer Fensteröffnung 12 versehen, die einen leichten Zugang zu der Innenkontur des Verbindungselements 4 erlaubt und nach einem Verlöten einen Zugang zu der Lötstelle zu Kontrollzwecken ermöglicht (siehe Fig. 1).

Im Bereich der ersten Enden 8, 9 des Drahtes 2 bzw. des Steckerkontaktes 1 wird idealerweise vor dem Verlöten bzw. noch vor dem Fixieren von Steckerkontakt 1 und Draht 2 durch den Schrumpfschlauch 6 eine Beschichtung mit einem Lot, beispielsweise Zinn, aufgebracht. Idealerweise entspricht die Gesamtlänge der so beschichteten Bereiche der beiden ersten Enden 8, 9 zumindest der Gesamtlänge des Verbindungsstückes 4.

Fig. 4 zeigt nun schematisch den Vorgang des Verlötens. Es werden die ersten Enden 8, 9 des Steckerkontaktes 1 und des Drahtes 2 mechanisch aneinander fixiert, im Beispiel nach Fig. 4 mit Hilfe eines Schrumpfschlauches 6. Anschließend werden die ersten Enden 8, 9 in eine erste Endöffnung 10 des Verbindungsstücks 4 eingeführt und es wird das Verbindungsstück in Pfeilrichtung über die ersten Enden 8, 9 auf den Steckerkontakt 1 und den Draht 2 aufgeschoben, bis beide erste Enden 8, 9 des Steckerkontaktes 1 und des Drahtes 2 aus einer zweiten Endöffnung 11 des Verbindungsstücks 4 austreten. Anschließend erfolgt das Verlöten des Steckerkontaktes 1 und des Drahtes 2 mit dem Verbindungsstück 4 durch Erhitzen des Lotes, wodurch letztlich eine Lotverbindung zwischen dem Draht 2 und dem Steckerkontakt 1 über das Verbindungsstück 4 hergestellt wird und für zukünftige Belastungen der Lotverbindung im späteren Betrieb eine mechanische Sicherung der Lötverbindung durch das Verbindungsstück 4 garantiert wird.

Die erfindungsgemäße Lötverbindung ist insbesondere für Anwendungen einsetzbar, bei denen Komponenten mit deutlich unterschiedlicher Betriebstemperatur vorliegen, wie insbesondere in kryogenen Einrichtungen. Ein Beispiel hierfür sind Anwendungen in der Raumfahrttechnik, bei denen z.B. kryogene Satellitennutzlasten oder Behälter für kryogene Treibstoffe eine Komponente eines Raumfahrzeuges bilden. Die beschriebene Lötverbindung kann jedoch auch in anderen kryogenen Einrichtungen verwendet werden.

## Patentansprüche

1. Verfahren zum Verlöten von mindestens zwei metallischen Komponenten, **gekennzeichnet durch**,
- Einführen jeweils eines ersten Endes der metallischen Komponenten in ein rohrförmiges Verbindungsstück, welches zumindest in einem Teilbereich seiner Oberfläche eine Beschichtung mit einem Lot aufweist und dessen Innenkontur weitgehend der Außenkontur zumindest eines der ersten Enden der metallischen Komponenten entspricht,
- Verlöten der ersten Enden der metallischen Komponenten mit dem rohrförmigen Verbindungsstück.

2. Verfahren nach Anspruch 1, **dadurch gekennzeichnet, dass** vor dem Einführen der ersten Enden in das rohrförmige Verbindungsstück die ersten Enden mit einem Lot beschichtet werden.

3. Verfahren nach Anspruch 1 oder 2, **dadurch gekennzeichnet, dass** vor dem Einführen der ersten Enden in das rohrförmige Verbindungsstück die ersten Enden mechanisch miteinander verbunden werden, die ersten Enden in ein erste Endöffnung des rohrförmige Verbindungsstücks eingeführt werden und das rohrförmige Verbindungsstück auf den metallischen Komponenten von den ersten Enden der metallischen Komponenten weg verschoben wird, bis beide erste Enden der metallischen Komponenten aus einer zweiten Endöffnung des rohrförmigen Verbindungsstücks austreten.

4. Verwendung eines Verfahrens nach einem der Ansprüche 1 bis 3 zum Verlöten eines Drahtes mit einem metallischen Kontakt.

5. Verwendung nach Anspruch 4 zum Verlöten eines Drahtes mit einem Durchmesser kleiner oder gleich 0,5 mm mit einem metallischen Kontakt.

6. Verwendung nach Anspruch 5 zum Verlöten eines Drahtes mit einem Durchmesser kleiner oder gleich 0,1 mm mit einem metallischen Kontakt.

7. Verwendung nach einem der Ansprüche 4 bis 6 zum Verlöten eines Stahldrahtes mit einem metallischen Kontakt.

8. Verwendung nach einem der Ansprüche 1 bis 7 zum Verlöten eines Drahtes als Bestandteil einer kryogenen Einrichtung.

9. Kryogene Einrichtung aufweisend eine Lötverbindung, hergestellt nach einem Verfahren nach einem der Ansprüche 1 bis 3.
